# EUROPEAN PATENT APPLICATION

(11) **EP 4 781 829 A1**
(43) Date of publication of application: **29.07.2026**
(21) Application number: 25153612.4
(22) Date of filing: 23.01.2025
(51) Int. Cl.: A23B 2/00, A23B 2/22, A23B 70/30, A23B 85/10, C12H 1/18, B65B 25/00

(54) **DOUBLE-DECK PASTEURIZING MACHINE WITH TREATMENT LIQUID REDIRECTION SYSTEM AND RELATED METHOD**

(71) Applicant: Sidel Participations, 76930 Octeville-sur-Mer (FR)
(72) Inventor: SOLFA, Andrea, 43126 Parma (IT)
(74) Representative: Sidel Group

(57) **Abstract**

There is described a pasteurizing machine (1) for food products packaged in containers (2), comprising a tunnel (3) with heating, heat-treatment, and cooling zones (4, 5, 6). The heating and cooling zones (4, 5) are divided into sub-zones (7, 10), each equipped with spraying devices (13) to apply treatment liquid. The machine (1) features an upper and lower conveyor (11, 12) for transporting containers (2) through the sub-zones. In the heat-treatment zone (5), there are two fluidically separated collection tanks (17, 18), with spraying devices (13a, 13b) for the upper and lower conveyors (11, 12). The system includes feeding circuits (19, 23) with pumping devices (20, 24) and valve members (21, 22, 25, 26) to control liquid flow, a bypass circuit (27) for liquid collection from the upper spraying device (13a), and deflecting member (31) for directing the liquid collected from the lower spraying device (13b) between collection tanks (17, 18).

## Description

### TECHNICAL FIELD

The present invention relates to a pasteurizing machine configured to pasteurize packaged food products.

The present invention also relates to a method for controlling a pasteurizing machine.

### BACKGROUND ART

As it is generally known, pasteurizing machines are used for pasteurizing packaged food products.

In particular, within a typical pasteurizing machine the food products, usually packaged into containers, such as bottles, jars or the like, are heat treated by spraying a liquid (usually water) at a controlled temperature on them.

Such pasteurizing machines are also known as tunnel pasteurizers.

Typically, machines of this sort comprise at least one conveyor, such as a belt conveyor, configured to move forward the containers to be pasteurized along a treatment path.

The treatment path is normally straight and extends through a series of consecutive processing zones, namely: a heating zone at which the product temperature is gradually raised; a heat-treatment zone at which the product temperature is brought to, and kept at for a desired time interval, a pasteurizing temperature; and a cooling zone at which the product temperature is gradually lowered to a desired output temperature.

Each processing zone is, in turn, divided into a plurality of sub-zones, each one of which is operable and controllable independently from the other sub-zones.

Each sub-zone comprises a spraying device positioned above the treatment path, i.e. above the conveyor, and at least one collection tank positioned below the treatment path, i.e. below the conveyor.

The spraying device is configured to spray the liquid onto the containers advanced by the conveyor, whilst the tank is configured to collect the liquid that has lapped/wet the containers, by action of gravity.

According to a known solution, the liquid fed to the spraying devices of the various sub-zones is taken from the collection tanks.

In particular, a process of recirculation is implemented, whereby the liquid fed to the spraying devices of the heating sub-zones is taken from the tanks of the cooling sub-zones, respectively, whilst the liquid fed to the spraying devices of the cooling sub-zones is taken from the tanks of the heating sub-zones, respectively.

In this way, it is possible to achieve an effective energy saving, thanks to the fact that the heat transferred to the processing liquid by the containers in the cooling zone may be used to heat the containers in the heating zone, and vice-versa.

Typically, at the heat-treatment zone, the liquid fed to the spraying devices of each relative sub-zone is taken directly from the tank of that same sub-zone.

Moreover, at least at each heat-treatment sub-zone, the steadiness of the temperature of the liquid is maintained at the desired level by a suitable heating unit which is thermally coupled to the relative recirculation duct extending from the tank to the spraying device.

The pasteurizing machine is usually part of a larger product packaging line which includes other units and machines, such as a filling machine (opportunely arranged upstream of the pasteurizing machine), a labelling machine, a packing machine (usually arranged downstream of the pasteurizing machine), or the like.

Double-deck pasteurizing machines are also known, comprising two conveyors arranged one above the other, i.e. an upper conveyor and a lower conveyor.

Typically, this double-deck configuration is used for reducing the pasteurizer footprint on the layout of the packaging line.

At each sub-zone, the liquid fed by the respective spraying device wets first the containers advanced by the upper conveyor, then wets the containers below advanced by the lower conveyor and is collected in the relative tank.

Double-deck countercurrent pasteurizing machines are also known, whereby the lower conveyor and the upper conveyor mutually advance the containers in opposite directions. That is, an upper treatment path and a lower treatment path are defined which span in opposite direction within the tunnel defined within the pasteurizing machine.

In such case, each sub-zone, also in the heating zone and cooling zone, is provided with the aforementioned independent recirculation of the liquid between the respective tank and the respective spraying device of the same sub-zone.

Moreover, at the heat-treatment sub-zones, the countercurrent machines are provided with additional spraying devices. In detail, each heat-treatment sub-zone comprises an upper spraying device and a lower spraying device, each respectively dedicated to wet the upper containers or the lower containers.

Furthermore, double-deck cocurrent pasteurizing machines are known in which the upper conveyor and the lower conveyor advance the containers in the same direction, but the product temperature needs to be controlled independently, at least at the heat-treatment sub-zones, for example due to different products within the containers, or due to the fact that each conveyor serves a different downstream unit or machine.

The possibility of a temporary stop of one or both conveyors is known, for example due to an interrupted operation of the machines located downstream of the pasteurizing machine.

In such a case, the containers are temporarily stopped along the treatment path and therefore at the heat-treatment zone.

Such stop may entail the risk of over-pasteurizing the product within the containers, if such containers are stopped at the heat-treatment zone for an excessive amount of time.

To this end, some prior art solutions solve this problem by spraying the containers stopped in the heat-treatment zone with colder water to cool down the product in the containers so as to limit its over-pasteurization, with the aim of keeping it below the over-pasteurization limit.

However, such solution causes high waste of fresh water and of energy, due to the fact that then the fresh water lowers the temperature of the collection tanks, which has then to be brought back to nominal before the process can restart, thereby leading to time-consuming transients.

A solution to this is proposed by EP-B-2058386, by the same Applicant. The configuration described in EP-B-2058386 works satisfyingly well in case of single-deck or double-deck cocurrent machines.

The need is felt for improving the flexibility and efficiency of the known pasteurizing machines, especially in the aforementioned cases of double-deck countercurrent pasteurizing machines or of double-deck cocurrent machines in which an independent temperature control is needed in each heat-treatment sub-zone.

### DISCLOSURE OF INVENTION

It is therefore an object of the present invention to provide a pasteurizing machine which is designed to overcome at least one of the above-mentioned drawbacks in a straightforward and low-cost manner.

This object is achieved by a pasteurizing machine as claimed in the appended independent claim 1.

Preferred embodiments of the present invention are laid down in the appended dependent claims.

### BRIEF DESCRIPTION OF THE DRAWINGS

Non-limiting embodiments of the present invention will be described by way of example with reference to the accompanying drawings, in which:
Figure 1 is a schematic lateral view, with parts removed for clarity, of a pasteurizing machine according to the present invention;
Figure 2 is a schematic lateral view, with parts removed for clarity, of a pasteurizing machine according to an alternative embodiment of the present invention;
Figures 3a to 3d are larger-scale, schematic lateral views, with parts removed for clarity, of a heat-treatment sub-zone of the pasteurizing machine according to the invention.

### BEST MODE FOR CARRYING OUT THE INVENTION

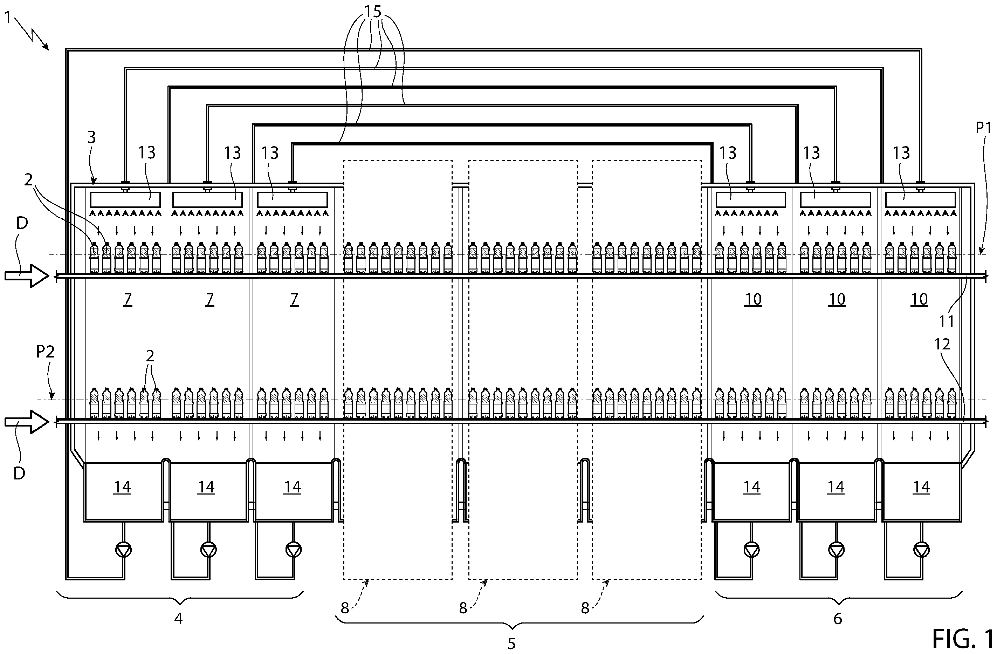

With reference to Figure 1, number 1 indicates as a whole a pasteurizing machine configured to pasteurize packaged food products.

In particular, machine 1 is configured to pasteurize containers 2 containing the food product, preferably a pourable product such as soft drinks, ice tea, beer, or the like.

Machine 1 comprises a tunnel 3 through which containers 2 are advanced, as explained below.

In detail, tunnel 3 defines a heating zone 4 along which the containers 2 are heated, a heat-treatment zone 5 along which the containers 2 are pasteurized, and a cooling zone 6 along which the containers 2 are cooled.

Each of the zones 4, 5, 6 is divided into one or more sub-zones, in the embodiment shown three sub-zones.

However, the number of sub-zones for each zone can vary, depending on the desired profile temperature to which the containers 2 are to be subjected to.

In greater detail, the heating zone 4 is divided into one or more consecutive heating sub-zones 7, the heat-treatment zone 5 is divided into one or more consecutive heat-treatment sub-zones 8, and the cooling zone 6 is divided into one or more consecutive cooling sub-zones 10.

As shown in Figure 1, machine 1 comprises:
- an upper conveyor 11 configured to advance a first plurality of containers 2 along an upper treatment path P1 extending through the sub-zones 7, 8, 10;
- a lower conveyor 12 configured to advance a second plurality of containers 2 along a lower treatment path P2 extending through the sub-zones 7, 8, 10.

Hence, machine 1 is a double-deck pasteurizing machine.

Preferably, upper conveyor 11 and lower conveyor 12 include an endless belt configured to be actuated, for example by an electric motor, for advancing containers 2 along the respective path P1 or P2.

According to a first embodiment shown in Figure 1, the upper conveyor 11 and the lower conveyor 12 are configured to advance the respective first and second pluralities of containers 2 in the same direction D.

In other words, according to such first embodiment, machine 1 is a cocurrent pasteurizing machine 1, whereby both the first and the second pluralities of containers 2 are advanced through tunnel 3 in the same direction D.

Accordingly, the heating zone 4, heat-treatment zone 5 and cooling zone 6 correspond, i.e. are the same, for the first plurality of containers 2 and for the second plurality of containers 2.

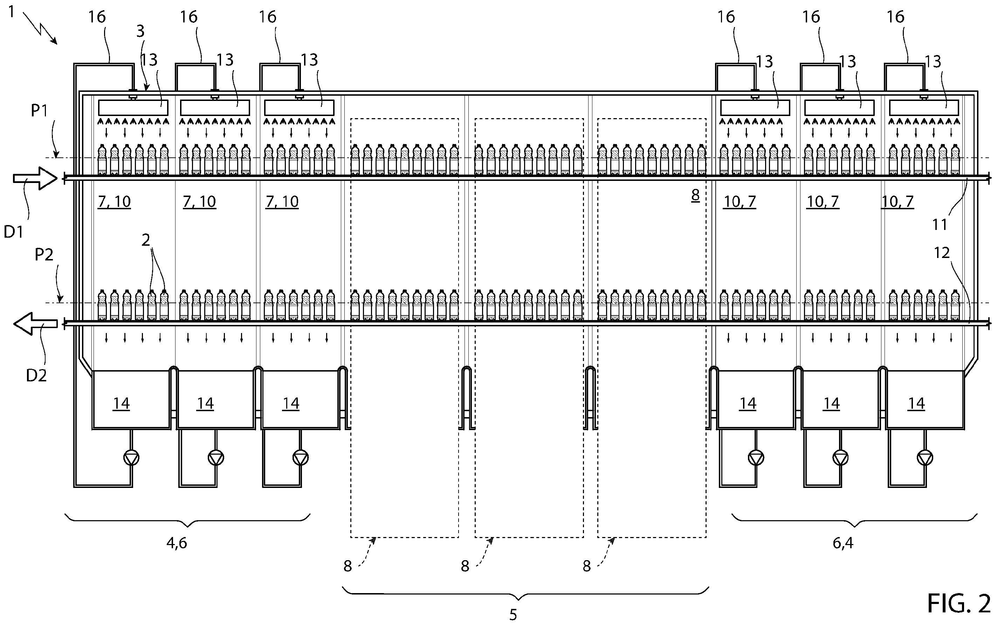

According to a second alternative embodiment shown in Figure 2, the upper conveyor 11 is configured to advance the first plurality of containers 2 in a first direction D1 and the lower conveyor 12 is configured to advance the second plurality of containers 2 in a second direction D2 opposite to the first direction D1.

In other words, according to such second embodiment, machine 1 is a countercurrent pasteurizing machine 1, whereby the first and the second pluralities of containers 2 are advanced through tunnel 3 in opposite directions D1 and D2, respectively.

Accordingly, the heating zone 4 for the first plurality of containers 2 corresponds to the cooling zone for the second plurality of containers, and the cooling zone 6 for the first plurality of containers 2 corresponds to the heating zone 4 for the second plurality of containers 2.

Regardless of the cocurrent or countercurrent configuration, each one of the heating sub-zones 7 and cooling sub-zones 10 comprises a spraying device 13 for spraying a treatment liquid (e.g. water) on the containers 2 advanced therethrough and a collection tank 14 for collecting the sprayed treatment liquid after it has wet the containers 2 advanced by the upper conveyor 11 and by the lower conveyor 12.

In detail, for each heating sub-zone 7 and cooling sub-zone 10, the water sprayed by spraying device 13 reaches first the containers 2 advanced by the upper conveyor 11 and then, by action of gravity, reaches the containers 2 advanced by the lower conveyor 12, before being collected in tank 14.

Hence, at each heating sub-zone 7 and cooling sub-zone 10, the upper conveyor 11 is arranged between the spraying device 13 and the lower conveyor 12, and the lower conveyor 12 is arranged between the upper conveyor 11 and the collection tank 14.

Conveniently, the liquid fed to the spraying devices 13 of the various sub-zones 7, 8, 10 is taken from predetermined collection tanks 14.

More specifically, in case of cocurrent configuration, the spraying devices 13 of the heating sub-zones 7 are fluidically connected to the tanks 14 of the cooling sub-zones 10, and the spraying devices 13 of the cooling sub-zones 10 are fluidically connected to the tanks 14 of the heating sub-zones 7, by means of respective recirculation ducts 15, in a manner known and not described in detail (shown in Figure 1).

Thus, the liquid fed to the spraying devices 13 of the heating sub-zones 7 is taken from the tanks 14 of the cooling sub-zones 10, whilst the liquid fed to the spraying devices 13 of the cooling sub-zones 10 is taken from the tanks 14 of the heating sub-zones 7, respectively.

In this way, it is possible to achieve effective energy saving, thanks to the fact that the heat transferred to the processing liquid by the containers 2 in the cooling zone 6 is used to heat the containers 2 in the heating zone 4, and vice-versa.

In case of countercurrent configuration, for each heating sub-zone 7 and cooling sub-zone 10, the spraying device 13 is fluidically connected to the tank 14 of the same sub-zone by means of a dedicated recirculation duct 16, as shown in Figure 2.

Thus, the liquid fed to the spraying devices 13 of each sub-zone 7, 10 is taken directly from the tank 14 of that same sub-zone 7, 10.

In other words, an independent recirculation of treatment liquid is defined for each sub-zone 7, 10.

The heat-treatment zone 5 of the machine 1 according to the present invention will be now described.

In particular, reference will be made in the following to a single heat-treatment sub-zone 8. However, the functional and structural features hereby described are equally applicable to each heat-treatment sub-zone 8.

More in particular, the features described hereinafter are advantageously equal for both the cocurrent or countercurrent configuration.

According to the present invention, and in particular regardless of the cocurrent or countercurrent configuration, each of the heat-treatment sub-zones 8 comprises:
- a first collection tank 17 and a second collection tank 18 fluidically separated from one another;
- an upper spraying device 13a configured for spraying the treatment liquid only onto the containers 2 advanced by the upper conveyor 11;
- a lower spraying device 13b configured for spraying the treatment liquid only onto the containers 2 advanced by the lower conveyor 12.

According to the present invention, the pasteurizing machine 1 further comprises a feeding system configured to: withdraw treatment liquid from the first collection tank 17 and supply such treatment liquid to the upper spraying device 13a and/or to the lower spraying device 13b; withdraw treatment liquid from the second collection tank 18 and supply such treatment liquid to the upper spraying device 13a and/or to the lower spraying device 13b; redirect the treatment liquid withdrawn from the first collection tank 17 into the same first collection tank 17; and redirect the treatment liquid withdrawn from the second collection tank 18 into the same second collection tank 18.

In particular, the feeding system comprises:
- a first feeding circuit 19 for feeding the treatment liquid from the first collection tank 17 towards the upper spraying device 11 and the lower spraying device 12 and including: a first pumping device 20 for withdrawing the liquid from the first collection tank 17; a first valve member 21 fluidically interposed between the first pumping device 20 and the lower spraying device 13b and configured to be actuated for selectively allowing or preventing the supply of treatment liquid to the lower spraying device 13b; and a second valve member 22 fluidically interposed between the first pumping device 20 and the upper spraying device 13a and configured to be actuated for selectively allowing or preventing the supply of treatment liquid to the upper spraying device 13a;

- a second feeding circuit 23 for feeding the treatment liquid from the second collection tank 18 towards the upper spraying device 13a and the lower spraying device 13b and including a second pumping device 24 for withdrawing the liquid from the second collection tank 18; a third valve member 25 fluidically interposed between the second pumping device 24 and the lower spraying device 13b and configured to be actuated for selectively allowing or preventing the supply of treatment liquid to the lower spraying device 13b; and a fourth valve member 26 fluidically interposed between the second pumping device 24 and the upper spraying device 13a and configured to be actuated for selectively allowing or preventing the supply of treatment liquid to the upper spraying device 13a;
- a bypass circuit 27 including: an upper collection member 28, preferably a collection tray, for collecting the treatment liquid sprayed by the upper spraying device 13a; and a bypass duct 29 connected to the upper collection member 28 for directing the treatment liquid collected by the upper collection member 28 towards the first collection tank 17 or the second collection tank 18, selectively;

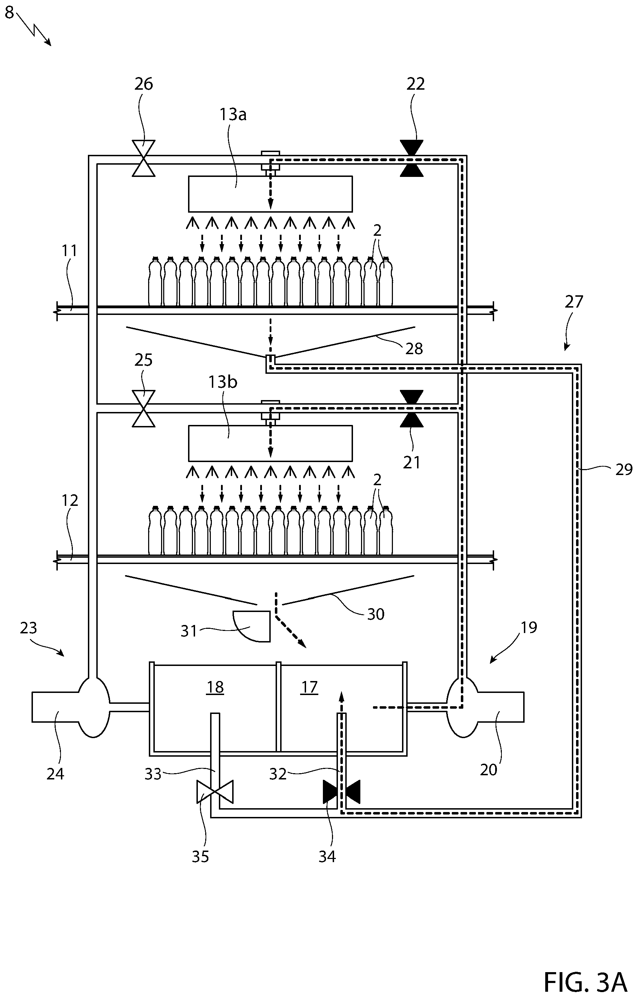

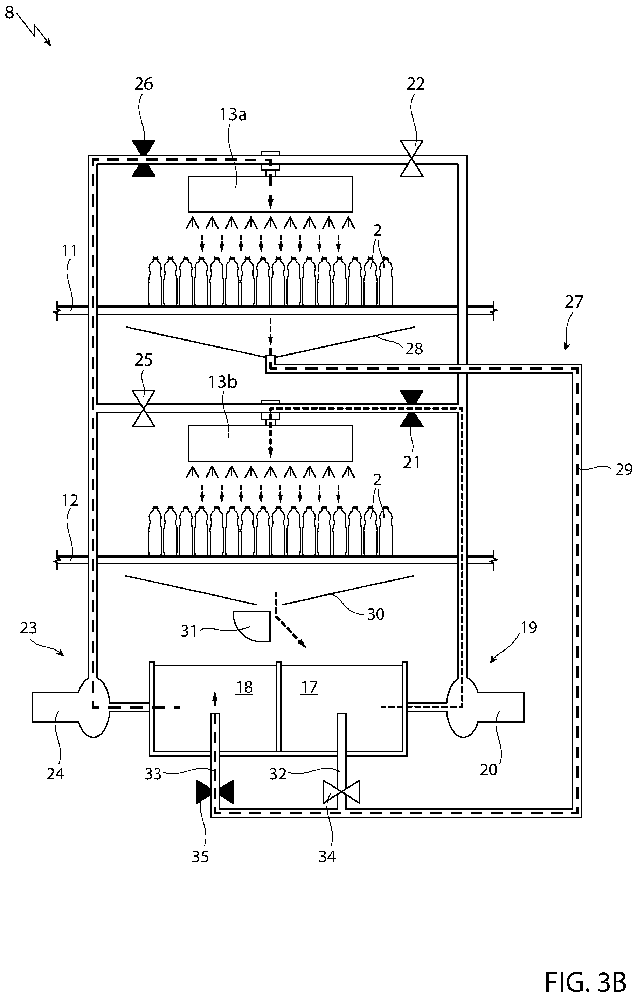

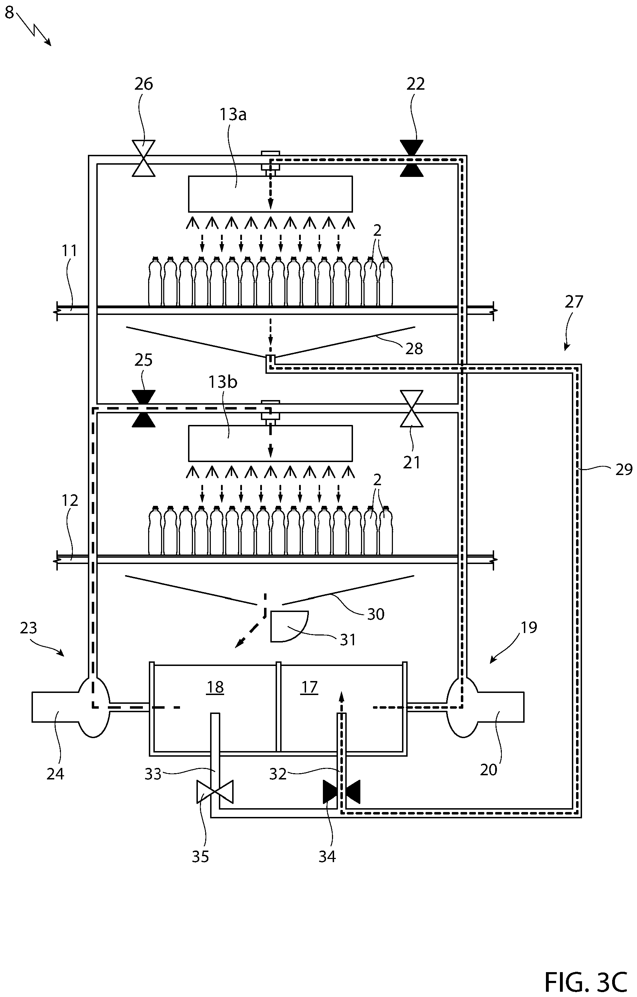

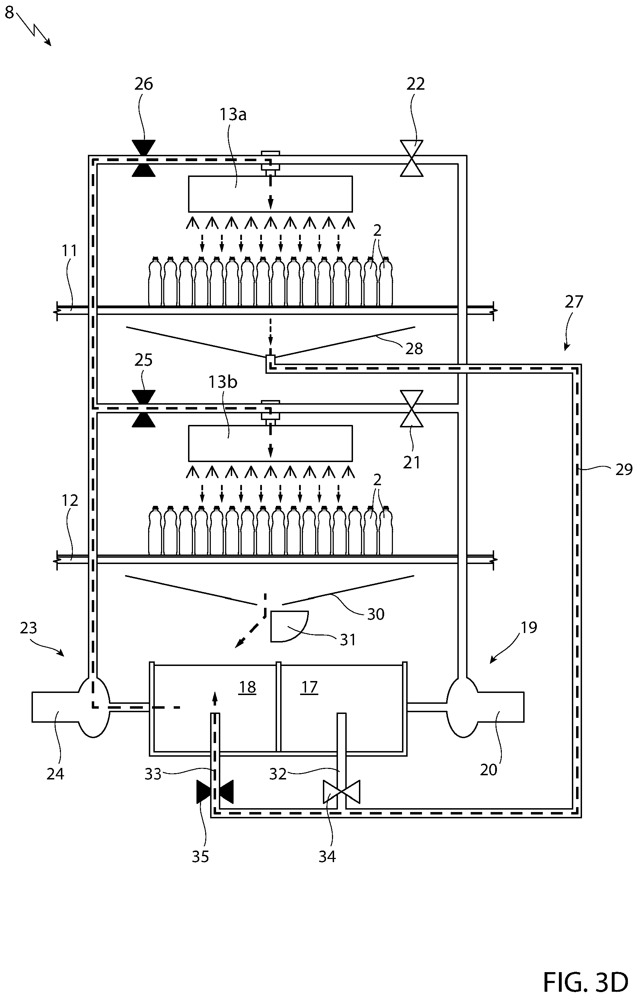

- a lower collection member 30 for collecting the treatment liquid sprayed by the lower spraying device 13b; and
- a deflecting member 31 associated with the lower collection member 30 and configured to be controlled in a first position (Figures 3a and 3b), for directing the treatment liquid collected by the lower collection member 30 into the first collection tank 17, and in a second position (Figures 3c and 3d) for directing the treatment liquid collected by the lower collection member 30 into the second collection tank 18.

Conveniently, bypass circuit 27 further includes:
- a first branching duct 32 branching from the bypass duct 29 for supplying the treatment liquid collected by the upper collection member 28 into the first collection tank 17, and a second branching duct 33 branching from the bypass duct 29 for supplying the treatment liquid collected by the upper collection member 28 into the second collection tank 18;
- a fifth valve member 34 arranged at the first branching duct 32 and configured to be actuated for selectively allowing or preventing the supply of treatment liquid into the first collection tank 17; and
- a sixth valve member 35 arranged at the second branching duct 33 and configured to be actuated for selectively allowing or preventing the supply of treatment liquid into the second collection tank 18.

According to an aspect of the invention, pasteurizing machine 1 is configured to be controlled in a first operative configuration (Figure 3a) for pasteurizing the containers 2 advanced both by the upper conveyor 11 and the lower conveyor 12, whereby for each heat-treatment sub-zone 8: the first pumping device 20 is activated, both the first valve member 21 and the second valve member 22 are controlled in an open configuration (depicted as full-black in the figures) for allowing the flow of the treatment liquid from the first collection tank 17 to both the upper spraying device 13a and the lower spraying device 13b, and the deflecting member 31 is controlled in the first position.

Conveniently, in such first operative configuration, for each heat-treatment sub-zone 8, the fifth valve member 34 is controlled in the open configuration for allowing the flow of the treatment liquid from the upper collection member 28 (back) into the first collection tank 17.

Expediently, in such first operative configuration, for each heat-treatment sub-zone 8, the second pumping device 24 is deactivated and the third valve member 25, fourth valve member 26 and sixth valve member 35 are controlled in a closed configuration (depicted as full-white in the figures) to prevent the flow of treatment liquid therethrough.

Preferably, at each heat-treatment sub-zone 8, the steadiness of the temperature of the liquid is maintained at the desired level by a suitable heating unit (known per se and not shown) which is thermally coupled to the relative first feeding circuit 19.

In this way, the temperature of the treatment liquid fed to the upper spraying device 13a and the lower spraying device 13b is always at the desired temperature.

According to a further aspect of the invention, pasteurizing machine 1 is configured to be controlled in a second operative configuration (Figure 3b) for maintaining or lowering a temperature of the containers 2 on (and in particular advanced by) the upper conveyor 11 while pasteurizing the containers 2 on (and in particular advanced by) the lower conveyor 12 at the same time, whereby for each heat-treatment sub-zone 8: both the first pumping device 20 and the second pumping device 24 are activated, the first valve member 21 is controlled in the open configuration for allowing the flow of the treatment liquid from the first collection tank 17 to the lower spraying device 13b, the fourth valve member 26 is controlled in an open configuration for allowing the flow of the treatment liquid from the second collection tank 18 to the upper spraying device 13a, the deflecting member 31 is controlled in the first position, and both the second valve member 22 and the third valve member 23 are controlled in the closed configuration for preventing the flow of treatment liquid therethrough.

Expediently, in such second operative configuration, for each heat-treatment sub-zone 8: the sixth valve member 35 is controlled in the open configuration for allowing the flow of the treatment liquid from the upper collection member 28 into the second collection tank 18, and the fifth valve member 34 is controlled in the closed configuration for preventing the flow of treatment liquid therethrough.

Opportunely, the first collection tank 17 is configured to contain treatment liquid at a temperature higher than the temperature of the liquid contained, in use, in the second collection tank 18.

More precisely, the first collection tank 17 is configured to contain liquid at the pasteurization temperature, whereas the second collection tank 18 is configured to contain liquid at a lower temperature.

According to a further aspect of the invention, pasteurizing machine 1 is configured to be controlled in a third operative configuration (Figure 3c) for maintaining or lowering a temperature of the containers 2 on (and in particular advanced by) the lower conveyor 13b while pasteurizing the containers 2 on (and in particular advanced by) the upper conveyor 13a at the same time, whereby for each heat-treatment sub-zone 8: both the first pumping device 20 and the second pumping device 24 are activated, the second valve member 22 is controlled in the open configuration for allowing the flow of the treatment liquid from the first collection tank 17 to the upper spraying device 13a, the third valve member 25 is controlled in the open configuration for allowing the flow of the treatment liquid from the second collection tank 18 to the lower spraying device 13b, the deflecting member 31 is controlled in the second position, and both the first valve member 21 and the fourth valve member 26 are controlled in the closed configuration for preventing the flow of treatment liquid therethrough.

Expediently, in such third operative configuration, for each heat-treatment sub-zone 8: the fifth valve member 34 is controlled in the open configuration for allowing the flow of the treatment liquid from the upper collection member 28 into the first collection tank 17, and the sixth valve member 35 is controlled in the closed configuration for preventing the flow of treatment liquid therethrough.

According to a further aspect of the present invention, the pasteurizing machine 1 is configured to be controlled in a fourth operative configuration (Figure 3d) for maintaining or lowering the temperature of the containers 2 advanced both by the upper conveyor 11 and the lower conveyor 12, whereby for each heat-treatment sub-zone 8: the second pumping device 24 is activated, both the third valve member 25 and the fourth valve member 26 are controlled in the open configuration for allowing the flow of the treatment liquid from the second collection tank 18 to both the upper spraying device 13a and the lower spraying device 13b, and the deflecting member 31 is controlled in the second position.

Conveniently, in such fourth operative configuration, for each heat-treatment sub-zone 8, the sixth valve member 35 is controlled in the open configuration for allowing the flow of the treatment liquid from the upper collection member 28 into the second collection tank 18.

Expediently, in such fourth operative configuration, for each heat-treatment sub-zone 8, the first pumping device 20 is deactivated and the first valve member 21, second valve member 22 and fifth valve member 34 are controlled in the closed position to prevent the flow of treatment liquid therethrough.

From the foregoing, it is clear how the pasteurizing machine 1 according to the present invention allows to implement a method for controlling the pasteurizing machine 1, the method comprising the steps of, for each heat-treatment sub-zone 8:
a) activating the first pumping device 20;
b) deactivating the second pumping device 24;
c) controlling the first valve member 21, the second valve member 22 and the fifth valve member 34 in an open configuration;
d) controlling the third valve member 25, fourth valve member 26 and sixth valve member 35 in a closed configuration;
e) controlling the deflecting member 31 in the first position;
and wherein the method comprises controlling the pasteurizing machine 1 in a first operative configuration (Figure 3a) for pasteurizing the containers 2 advanced both by the upper conveyor 11 and the lower conveyor 12 by performing the steps from a) to e).

According to a further aspect of the invention, the method comprises the steps of:
f) activating both the first pumping device 20 and the second pumping device 24;
g) controlling the first valve member 21, fourth valve member 26 and sixth valve member 35 in an open configuration;
h) controlling the second valve member 22, third valve member 25 and fifth valve member 34 in a closed configuration;
i) controlling the deflecting member 31 in the first position;
and wherein the method comprises controlling the pasteurizing machine 1 in a second operative configuration (Figure 3b) for maintaining or lowering a temperature of the containers 2 on (and in particular advanced by) the upper conveyor 11 while pasteurizing the containers 2 on (and in particular advanced by) the lower conveyor 12 at the same time by performing the steps from f) to i) .

According to a further aspect of the present invention, the method comprises the steps of:
j) activating both the first pumping device 20 and the second pumping device 24;
k) controlling the second valve member 22, third valve member 25 and fifth valve member 34 in an open configuration;
1) controlling the first valve member 21, fourth valve member 26 and sixth valve member 35 in a closed configuration;
m) controlling the deflecting member 31 in the second position;
and wherein the method comprises controlling the pasteurizing machine 1 in a third operative configuration (Figure 3c) for maintaining or lowering a temperature of the containers 2 on (and in particular advanced by) the lower conveyor 12 while pasteurizing the containers 2 on (and in particular advanced by) the upper conveyor 11 at the same time by performing the steps from j) to m).

According to a further aspect of the present invention, the method comprises the steps of:
n) activating the second pumping device 24;
o) deactivating the first pumping device 20;
p) controlling the third valve member 25, the fourth valve member 26 and the sixth valve member 35 in an open configuration;
q) controlling the first valve member 21, second valve member 22 and fifth valve member 34 in a closed configuration;
r) controlling the deflecting member 31 in the second position;
and wherein the method comprises controlling the pasteurizing machine 1 in a fourth operative configuration (Figure 3d) for maintaining or lowering the temperature of the containers 2 advanced both by the upper conveyor 11 and the lower conveyor 12 by performing the steps from n) to r) .

It is stated that with the expression "pasteurizing the containers" it is intended, in the present description and in the appended claims, "pasteurizing the food product contained within the containers".

The advantages of pasteurizing machine 1 and of the related method according to the present invention will be clear from the foregoing description.

In particular, an easy, straightforward and cost-effective control of each heat-treatment sub-zone 8 is obtained, whereby each sub-zone 8 can be independently and effectively controlled from the other sub-zones 8.

Hence, the flexibility, adaptability and efficiency of pasteurizing machine 1 is significantly improved, compared to the known double-deck pasteurizing machines.

In fact, in case a temporary stop occurs for any of the upper conveyor 11 or lower conveyor 12, which determines a permanence of containers 2 in a heat-treatment sub-zone 8 longer than forecasted, an independent, tailored and adapted control of the temperature of the first and/or second plurality of containers 2 can be easily implemented, simply by opportunely switching the aforementioned valves 21, 22, 24, 25, 34, 35, pumping devices 20, 24 and deflector member 31.

This is particularly advantageous for machines 1 which adopt the aforementioned countercurrent configuration and also for machines 1 which adopt a cocurrent configuration and in which an independent temperature control is needed in each heat-treatment sub-zone 8 between the upper conveyor 11 and the lower conveyor 12.

Thus, an independent control of the temperature of the containers 2 advanced by the upper conveyor 11 and lower conveyor 12 at the heat-treatment sub-zones 8 is obtained in an easy and cost-effective manner.

Furthermore, this solution leads to significant improvements in terms of energy savings, due to the fact that the treatment liquid in the first and second tanks 17, 18 are never mixed. Therefore, the respective temperatures can easily be maintained at the same level, without unduly complicating the architecture of machine 1 and/or without the need for injection of new (or fresh) treatment liquid in the system.

Clearly, changes may be made to pasteurizing machine 1 and to the related method for controlling the pasteurizing machine 1 as described herein without, however, departing from the scope of protection as defined in the accompanying claims.

## Claims

1. Pasteurizing machine (1) configured to pasteurize a food product packaged into containers (2), the pasteurizing machine (1) comprising:
- a tunnel (3) defining a heating zone (4) along which the containers (2) are heated, a heat-treatment zone (5) along which the containers (2) are pasteurized, and a cooling zone (6) along which the containers (2) are cooled, the heating zone (4) being divided into one or more consecutive heating sub-zones (7), the heat-treatment zone (5) being divided into one or more consecutive heat-treatment sub-zones (8), and the cooling zone (6) being divided into one or more consecutive cooling sub-zones (10);
- an upper conveyor (11) configured to advance a first plurality of containers (2) along an upper treatment path (P1) extending through the sub-zones (7, 8, 10);
- a lower conveyor (12) configured to advance a second plurality of containers (2) along a lower treatment path (P2) extending through the sub-zones (7, 8, 10);
each one of the heating sub-zones (7) and cooling sub-zones (10) comprising a spraying device (13) for spraying a treatment liquid on the containers (2) advanced therethrough and a collection tank (14) for collecting the sprayed treatment liquid after it has wet the containers (2) advanced by the upper conveyor (11) and by the lower conveyor (12);
wherein each of the heat-treatment sub-zones (8) comprises:
- a first collection tank (17) and a second collection tank (18) fluidically separated from one another;
- an upper spraying device (13a) configured for spraying the treatment liquid only onto the containers (2) advanced by the upper conveyor (11);
- a lower spraying device (13b) configured for spraying the treatment liquid only onto the containers (2) advanced by the lower conveyor (12);
wherein the pasteurizing machine (1) further comprises a feeding system configured to: withdraw treatment liquid from the first collection tank (17) and supply such treatment liquid to the upper spraying device (13a) and/or to the lower spraying device (13b); withdraw treatment liquid from the second collection tank (18) and supply such treatment liquid to the upper spraying device (13a) and/or to the lower spraying device (13b); redirect the treatment liquid withdrawn from the first collection tank (17) into the same first collection tank (17); and redirect the treatment liquid withdrawn from the second collection tank (18) into the same second collection tank (18) .

2. Pasteurizing machine as claimed in claim 1, wherein the feeding system comprises:
- a first feeding circuit (19) for feeding the treatment liquid from the first collection tank (17) towards the upper spraying device (13a) and the lower spraying device (13b) and including a first pumping device (20) for withdrawing the liquid from the first collection tank (17), a first valve member (21) fluidically interposed between the first pumping device (20) and the lower spraying device (13b) and configured to be actuated for selectively allowing or preventing the supply of treatment liquid to the lower spraying device (13b), and a second valve member (22) fluidically interposed between the first pumping device (20) and the upper spraying device (13a) and configured to be actuated for selectively allowing or preventing the supply of treatment liquid to the upper spraying device (13a);
- a second feeding circuit (23) for feeding the treatment liquid from the second collection tank (18) towards the upper spraying device (13a) and the lower spraying device (13b) and including a second pumping device (24) for withdrawing the liquid from the second collection tank (18), a third valve member (25) fluidically interposed between the second pumping device (24) and the lower spraying device (13b) and configured to be actuated for selectively allowing or preventing the supply of treatment liquid to the lower spraying device (13b), and a fourth valve member (26) fluidically interposed between the second pumping device (24) and the upper spraying device (13a) and configured to be actuated for selectively allowing or preventing the supply of treatment liquid to the upper spraying device (13a);
- a bypass circuit (27) including an upper collection member (28) for collecting the treatment liquid sprayed by the upper spraying device (13a) and a bypass duct (29) connected to the upper collection member (28) for directing the treatment liquid collected by the upper collection member (28) towards the first collection tank (17) or the second collection tank (18), selectively;
- a lower collection member (30) for collecting the treatment liquid sprayed by the lower spraying device (13b); and
- a deflecting member (31) associated with the lower collection member (30) and configured to be controlled in a first position, for directing the treatment liquid collected by the lower collection member (30) into the first collection tank (17), and in a second position for directing the treatment liquid collected by the lower collection member (30) into the second collection tank (18) .

3. Pasteurizing machine as claimed in claim 2, wherein the bypass circuit (27) further includes:
- a first branching duct (32) branching from the bypass duct (29) for supplying the treatment liquid collected by the upper collection member (28) into the first collection tank (17), and a second branching duct (33) branching from the bypass duct (29) for supplying the treatment liquid collected by the upper collection member (28) into the second collection tank (18);
- a fifth valve member (34) arranged at the first branching duct (32) and configured to be actuated for selectively allowing or preventing the supply of treatment liquid into the first collection tank (17); and
- a sixth valve member (35) arranged at the second branching duct (33) and configured to be actuated for selectively allowing or preventing the supply of treatment liquid into the second collection tank (18).

4. Pasteurizing machine as claimed in claim 2 or 3, wherein the pasteurizing machine (1) is configured to be controlled in a first operative configuration for pasteurizing the containers (2) advanced both by the upper conveyor (11) and the lower conveyor (12), whereby for each heat-treatment sub-zone (8): the first pumping device (20) is activated, both the first valve member (21) and the second valve member (22) are controlled in an open configuration for allowing the flow of the treatment liquid from the first collection tank (17) to both the upper spraying device (13a) and the lower spraying device (13b), and the deflecting member (31) is controlled in the first position.

5. Pasteurizing machine as claimed in claims 3 and 4, wherein furthermore, for each heat-treatment sub-zone (8), the fifth valve member (34) is controlled in an open configuration for allowing the flow of the treatment liquid from the upper collection member (28) into the first collection tank (17).

6. Pasteurizing machine as claimed in claim 5, wherein furthermore, for each heat-treatment sub-zone (8), the second pumping device (24) is deactivated and the third valve member (25), fourth valve member (26) and sixth valve member (35) are controlled in a closed configuration to prevent the flow of treatment liquid therethrough.

7. Pasteurizing machine as claimed in any one of the claims 2 to 6, wherein the pasteurizing machine (1) is configured to be controlled in a second operative configuration for maintaining or lowering a temperature of the containers (2) on the upper conveyor (11) while pasteurizing the containers (2) on the lower conveyor (12) at the same time, whereby for each heat-treatment sub-zone (8): both the first pumping device (20) and the second pumping device (24) are activated, the first valve member (21) is controlled in the open configuration for allowing the flow of the treatment liquid from the first collection tank (17) to the lower spraying device (13a), the fourth valve member (26) is controlled in an open configuration for allowing the flow of the treatment liquid from the second collection tank (18) to the upper spraying device (13a), the deflecting member (31) is controlled in the first position, and both the second valve member (22) and the third valve member (25) are controlled in a closed configuration for preventing the flow of treatment liquid therethrough.

8. Pasteurizing machine as claimed in claims 3 and 7, wherein furthermore, for each heat-treatment sub-zone (8): the sixth valve member (35) is controlled in an open configuration for allowing the flow of the treatment liquid from the upper collection member (28) into the second collection tank (18), and the fifth valve member (34) is controlled in a closed configuration for preventing the flow of treatment liquid therethrough.

9. Pasteurizing machine as claimed in any one of the claims 2 to 8, wherein the pasteurizing machine (1) is configured to be controlled in a third operative configuration for maintaining or lowering a temperature of the containers (2) on the lower conveyor (12) while pasteurizing the containers (2) on the upper conveyor (11) at the same time, whereby for each heat-treatment sub-zone (8): both the first pumping device (20) and the second pumping device (24) are activated, the second valve member (22) is controlled in the open configuration for allowing the flow of the treatment liquid from the first collection tank (17) to the upper spraying device (13a), the third valve member (25) is controlled in an open configuration for allowing the flow of the treatment liquid from the second collection tank (18) to the lower spraying device (13b), the deflecting member (31) is controlled in the second position, and both the first valve member (21) and the fourth valve member (26) are controlled in a closed configuration for preventing the flow of treatment liquid therethrough.

10. Pasteurizing machine as claimed in claims 3 and 9, wherein furthermore, for each heat-treatment sub-zone (8): the fifth valve member (34) is controlled in an open configuration for allowing the flow of the treatment liquid from the upper collection member (28) into the first collection tank (17), and the sixth valve member (35) is controlled in a closed configuration for preventing the flow of treatment liquid therethrough.

11. Pasteurizing machine as claimed in any one of the claims 2 to 10, wherein the pasteurizing machine (1) is configured to be controlled in a fourth operative configuration for maintaining or lowering the temperature of the containers (2) on both the upper conveyor (11) and the lower conveyor (12), whereby for each heat-treatment sub-zone (8) : the second pumping device (24) is activated, both the third valve member (25) and the fourth valve member (26) are controlled in an open configuration for allowing the flow of the treatment liquid from the second collection tank (18) to both the upper spraying device (13a) and the lower spraying device (13b), and the deflecting member (31) is controlled in the second position.

12. Pasteurizing machine as claimed in claims 3 and 11, wherein furthermore, for each heat-treatment sub-zone (8), the sixth valve member (35) is controlled in an open configuration for allowing the flow of the treatment liquid from the upper collection member (28) into the second collection tank (18).

13. Pasteurizing machine as claimed in claim 12, wherein furthermore, for each heat-treatment sub-zone (8), the first pumping device (20) is deactivated and the first valve member (21), second valve member (22) and fifth valve member (34) are controlled in a closed position to prevent the flow of treatment liquid therethrough.

14. Pasteurizing machine as claimed in any one of the foregoing claims, wherein the upper conveyor (11) and the lower conveyor (12) are configured to advance the respective first and second pluralities of containers (2) in the same direction (D).

15. Pasteurizing machine as claimed in any one of claims 1 to 13, wherein the upper conveyor (11) is configured to advance the first plurality of containers (2) in a first direction (D1) and the lower conveyor (12) is configured to advance the second plurality of containers (2) in a second direction (D2) opposite to the first direction (D1).

16. Method for controlling the pasteurizing machine (1) as claimed in claims 1 to 3, the method comprising the steps of, for each heat-treatment sub-zone (8):
a) activating the first pumping device (20);
b) deactivating the second pumping device (24);
c) controlling the first valve member (21), the second valve member (22) and the fifth valve member (34) in an open configuration;
d) controlling the third valve member (25), fourth valve member (26) and sixth valve member (35) in a closed configuration;
e) controlling the deflecting member (31) in the first position;
and wherein the method comprises controlling the pasteurizing machine (1) in a first operative configuration for pasteurizing the containers (2) advanced both by the upper conveyor (11) and the lower conveyor (12) by performing the steps from a) to e).

17. Method for controlling the pasteurizing machine as claimed in claims 1 to 3, the method comprising the steps of:
f) activating both the first pumping device (20) and the second pumping device (24);
g) controlling the first valve member (21), fourth valve member (26) and sixth valve member (35) in an open configuration;
h) controlling the second valve member (22), third valve member (25) and fifth valve member (34) in a closed configuration;
i) controlling the deflecting member (31) in the first position;
and wherein the method comprises controlling the pasteurizing machine (1) in a second operative configuration for maintaining or lowering a temperature of the containers (2) on the upper conveyor (11) while pasteurizing the containers (2) on the lower conveyor (12) at the same time by performing the steps from f) to i) .

18. Method for controlling the pasteurizing machine as claimed in claims 1 to 3, the method comprising the steps of:
j) activating both the first pumping device (20) and the second pumping device (24);
k) controlling the second valve member (22), third valve member (25) and fifth valve member (34) in an open configuration;
l) controlling the first valve member (21), fourth valve member (26) and sixth valve member (35) in a closed configuration;
m) controlling the deflecting member (31) in the second position;
and wherein the method comprises controlling the pasteurizing machine (1) in a third operative configuration for maintaining or lowering a temperature of the containers (2) on the lower conveyor (12) while pasteurizing the containers (2) on the upper conveyor (11) at the same time by performing the steps from j) to m) .

19. Method for controlling the pasteurizing machine as claimed in claims 1 to 3, the method comprising the steps of:
n) activating the second pumping device (24);
o) deactivating the first pumping device (20);
p) controlling the third valve member (25), the fourth valve member (26) and the sixth valve member (35) in an open configuration;
q) controlling the first valve member (21), second valve member (22) and fifth valve member (35) in a closed configuration;
r) controlling the deflecting member (31) in the second position;
and wherein the method comprises controlling the pasteurizing machine (1) in a fourth operative configuration for maintaining or lowering the temperature of the containers (2) on both the upper conveyor (11) and the lower conveyor (12) by performing the steps from n) to r) .
